# EUROPEAN PATENT APPLICATION

(11) **EP 4 697 158 A1**
(43) Date of publication of application: **18.02.2026**
(21) Application number: 25195561.3
(22) Date of filing: 13.08.2025
(51) Int. Cl.: G06F 3/16, G10L 15/16, G10L 15/26, G10L 15/18, G10L 15/22, G05B 15/02, G10L 15/00

(54) **CONTROL DEVICE AND METHOD**

(30) Priority: 16.08.2024 US 202463683742 P
(71) Applicant: Good Way Technology Co., Ltd., New Taipei City 231 (TW)
(72) Inventor: WANG, Hua-Yi, NEW TAIPEI CITY 231 (TW); LAI, Jing-Rong, NEW TAIPEI CITY 231 (TW)
(74) Representative: Cabinet Beaumont

(57) **Abstract**

A control device for controlling at least one controlled device includes a processor and a communication interface that communicates with the at least one controlled device. The processor obtains an input signal. The processor based on the input signal, generates a control instruction that corresponds to the at least one controlled device. The processor sends the control instruction to the at least one controlled device to control the at least one controlled device to execute the control instruction that corresponds to the input signal.

## Description

### BACKGROUND

### Field of Invention

The present disclosure relates to a control device and method. More particularly, the present disclosure relates to a control device and method capable of performing control in response to an input signal.

### Description of Related Art

In existing device control technologies, when it is necessary to automatically control a controlled device in response to different input signals, a significant amount of human labor is required. Even with the introduction of automated control technologies, the controlled device can only operate according to a predetermined mode and cannot perform corresponding operations in response to real-time demands.

In view of the foregoing, providing a more convenient technology capable of controlling a controlled device in response to input signals has become a goal that the industry urgently strives to achieve.

### SUMMARY

In order to solve the above problems, the present disclosure provides a control device being configured to control at least one controlled device. The control device includes a communication interface and a processor. The communication interface is configured to communicate with the at least one controlled device. The processor is electrically coupled to the communication interface and is configured to execute operations of: obtaining an input signal; based on the input signal, generating a control instruction corresponding to the at least one controlled device; and sending the control instruction to the at least one controlled device to control the at least one controlled device to execute the control instruction corresponding to the input signal.

The present disclosure further provides a control method. The control method is applied to an electronic device and includes steps of: obtaining an input signal; based on the input signal, generating a control instruction that corresponds to at least one controlled device; and sending the control instruction to the at least one controlled device to control the at least one controlled device to execute the control instruction that corresponds to the input signal.

It is to be understood that both the foregoing general description and the following detailed description are by examples, and are intended to provide further explanation of the present disclosure as claimed.

### BRIEF DESCRIPTION OF THE DRAWINGS

The present disclosure can be more fully understood by reading the following detailed description of the embodiment, with reference made to the accompanying drawings as follows:
FIG. 1 is a schematic diagram of a control device according to the first embodiment of the present disclosure;
FIG. 2 is a schematic diagram of a flow of the control device generating a control instruction according to some embodiments of the present disclosure;
FIG. 3 is a schematic diagram of a flow of generating an object data set according to some embodiments of the present disclosure;
FIG. 4 is a schematic diagram of a flow of a control device utilizing the object data set to perform a visual content recognition and generate the control instruction according to some embodiments of the present disclosure; and
FIG. 5 is a partial flow chart of a control method according to the second embodiment of the present disclosure.

### DETAILED DESCRIPTION

Reference will now be made in detail to the present embodiments of the present disclosure, examples of which are illustrated in the accompanying drawings. Wherever possible, the same reference numbers are used in the drawings and the description to refer to the same or like parts.

The present disclosure provides a technology of converting an input signal into a device control instruction. The input signal may be an input from a device (e.g., input generated by a user-operated device, input generated by an electronic device automatically starting up, voice input generated by a voice device, visual content input generated by a visual device).

In some embodiments, the input signal may be a signal generated by a signal source such as a machine learning model, a sensor and/or an electronic device.

In some embodiments, the present disclosure may provide a technology for converting a user's input voice and/or input text into a device control instruction. First, the present disclosure converts the input voice into text. Next, the present disclosure converts the converted text and/or input text into a device control instruction based on a language model.

The present disclosure may be applied to many technical fields, such as image capturing device control, robotic arm control, automated retail system, etc. The present disclosure may convert an input signal into an instruction for controlling a device, providing a more convenient device control technology.

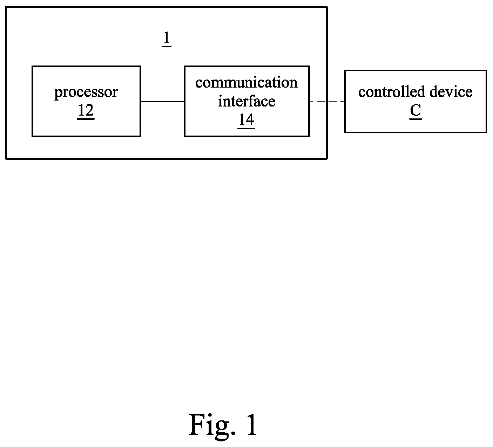

Please refer to FIG. 1, which is a schematic diagram of a control device 1 according to the first embodiment of the present disclosure. The control device 1 includes a processor 12 and a communication interface 14, and the processor 12 is electrically coupled to the communication interface 14. The communication interface 14 is configured to communicate with at least one controlled device C. The control device 1 is configured to control the controlled device C based on the input signal (e.g., user input).

In some embodiments, the processor 12 may include a central processing unit (CPU), a graphics processing unit (GPU), a multi-processor, a distributed processing system, an application specific integrated circuit (ASIC) and/or other suitable computing units.

The communication interface 14 is configured to send signals and/or data to the controlled device C and to receive signals and/or data from the controlled device C. The signals and/or data may include images, control instructions, etc. In some embodiments, the communication interface 14 may communicate with the controlled device C via a wireless communication interface such as Bluetooth, Wi-Fi, etc. and/or a wired communication interface such as Ethernet, RS-232, Universal Serial Bus (USB), etc.

The controlled device C is a device that receives a control instruction from the control device 1 and executes an operation corresponding to the control instruction. For example, the controlled device C may be an electronic device such as a robot arm, a power switch, an automation instrument, a computer, a home appliance, etc. Accordingly, the control device 1 has a wide range of applications, exhibits highly versatility, and may be applied in various technical fields.

In some embodiments, the controlled device C is configured to obtain visual content. In some embodiments, the controlled device C is a network video camera and communicates with the control device 1. In some embodiments, the controlled device C includes a data access circuit, a video camera, or a camera with burst mode, for obtaining visual content. For example, the controlled camera includes a digital single-lens reflex camera (DSLR), a digital video camera (DVC), or a near-infrared camera (NIRC). In other words, the visual content may be an image or a video, but the present disclosure is not limited thereto.

In some embodiments, in order to obtain visual content (e.g., capture images) from different viewing angles, the controlled device C includes, in addition to an image capturing mechanism, a mechanical structure for moving and/or rotating the image capturing mechanism. For example, the controlled device C includes a PTZ camera (Pan-Tilt-Zoom camera).

In some embodiments, the user may perform an input operation through the control device 1 itself and the control device 1 generates the input signal, or the user may perform an input operation through an external device that communicates with the control device 1 and then the external device sends a signal corresponding to the input operation to the control device 1.

Specifically, in some embodiments, the external device generates the corresponding input signal based on the input operation and then sends the input signal to the control device 1. In some embodiments, the external device generates the corresponding signal based on the input operation and sends the signal thus generated to the control device 1, then the control device 1 generates the corresponding input signal based on the signal thus received.

In some embodiments, the control device 1 further includes an input interface (not shown) for receiving user's input, such as a microphone, a keyboard, a mouse, a touch screen, etc.

It should be noted that although FIG. 1 illustrates single controlled device C as an example, the present disclosure is not limited thereto. In other embodiments, the control device 1 may communicate with two or more controlled devices C.

In this embodiment, in order to control the controlled device C (for example, control according to the user's indication), the control device 1 first obtains an input signal and converts the input signal into a control instruction for controlling the controlled device C. Finally, the control device 1 sends the control instruction to the controlled device C. In this way, the control device 1 enables the controlled device C to execute the control instruction and to operate according to indication of the input signal.

Specifically, the processor 12 is configured to execute operations of: obtaining an input signal; based on the input signal, generating a control instruction that corresponds to the at least one controlled device; and sending the control instruction to the at least one controlled device to control the at least one controlled device to execute the control instruction that corresponds to the input signal.

For example, when the user inputs text/voice "move the camera to the right", the control device 1 may convert the input text/voice (i.e., input signal) into a control instruction that can be read by the controlled device C, such that the controlled device C is moved to right.

It should be noted that the input signal maybe a text, voice, gesture, expression and/or action, etc. input by the user, or a signal generated by a sensor, a machine learning model and/or other devices. It can be seen that the control device 1 may receive many different input signals and convert input signals into control instructions accordingly.

Furthermore, the control instruction is generated according to the function and/or structure of the controlled device C. For example, in an embodiment where the controlled device C is an image capturing device, the control instruction may include instructions for adjusting imaging parameters such as extending or retracting the lens, zooming, focusing, adjusting the aperture, and adjusting the ISO value. In some embodiments, the controlled device C includes a motor for movement and rotation (e.g., a PTZ camera), and the control instruction may include instructions for controlling the motor.

In some embodiments, after receiving the input signal, the control device 1 first converts the input signal into a high-level control instruction, and then converts the high-level control instruction into a low-level control instruction that corresponds to the controlled device C.

For example, after receiving text input by the user (i.e., input signal), the control device 1 utilizes a language model to understand the semantics of the text and converts the text into a high-level control instruction for controlling the controlled device C. Next, the control device 1 converts the high-level control instruction into a low-level control instruction that can be read by the controlled device C according to the specification and/or control protocol of the controlled device C to control the controlled device C.

Specifically, the processor 12 is configured to execute operations of: obtaining an input signal; based on the input signal, generating a high-level control instruction; converting the high-level control instruction into a low-level control instruction that corresponds to the at least one controlled device; and sending the low-level control instruction to the at least one controlled device to control the at least one controlled device to execute the low-level control instruction that corresponds to the input signal.

In some embodiments, the control device 1 further combines a visual recognition result of a visual content to generate the control instruction. Specifically, the processor 12 is further configured to execute operations of: performing a visual content recognition on a visual content to generate a visual recognition result. The operation of generating the control instruction further includes: based on the input signal and the visual recognition result, generating the control instruction that corresponds to the at least one controlled device.

It should be noted that the visual content may be a visual content obtained by the controlled device C (e.g., image captured by the controlled device), or may be visual content obtained from other sources, the present disclosure is not limited thereto. In some embodiments, the control device 1 performs the visual content recognition (e.g., image recognition) on the visual content obtained by the controlled device C to recognize objects in the visual content. Specifically, the visual content is obtained by the at least one controlled device.

It should be noted that the "object" as referred to in the present disclosure may include not only objects, but also individuals, animals, or any entities that exhibit distinguishable external appearances. When performing the visual content recognition, the control device 1 is capable of recognizing different objects based on their appearance differences-for example, recognizing different individuals by distinguishing their facial features.

In some embodiments, the input signal is obtained by converting the voice input by the user. The control device 1 first converts the user's input (e.g., input voice) into text (i.e., the input signal). Then, the control device 1 generates the control instruction for the controlled device C based on the converted text, and controls the controlled device C accordingly.

Specifically, the operation of obtaining the input signal of the processor 12 further includes: obtaining an input voice of a user; and converting the input voice into the input signal.

In combination with the above-mentioned embodiments, the control device 1 may control the controlled device C by using the voice and/or text input by the user in combination with the visual content (e.g., images). For example, the control device 1 recognizes Kevin, Mary, and John from the visual content obtained by the controlled device C. On the other hand, the control device 1 receives the voice input by the user, and uses the speech recognition model to convert the input voice into the text "Please track Mary" (i.e., input signal). Accordingly, the control device 1 may combine the visual recognition result and the input signal to generate the control instruction and to send the control instruction to the controlled device C. The control instruction causes the controlled device C to move and/or rotate based on Mary's position so that Mary is remained in the center of the visual content. In addition, the control device 1 may further continuously generate control instructions so that the controlled device C may keep tracking Mary for a certain period of time thereafter.

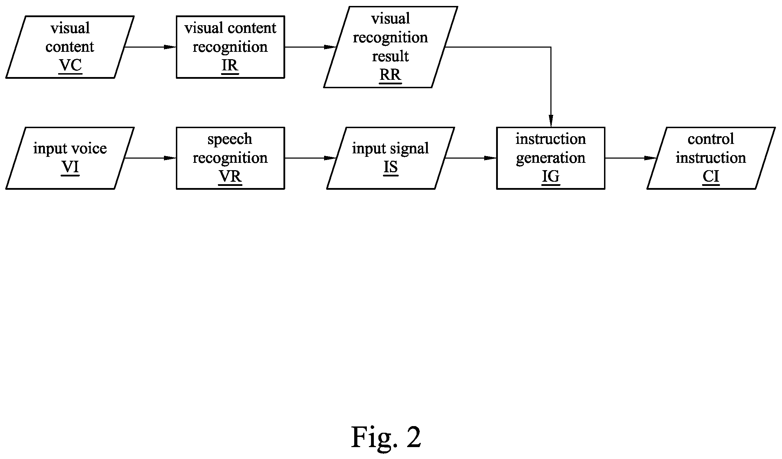

For ease of understanding, please refer to FIG. 2, which is a schematic diagram of the control device 1 generating the control instruction CI for the controlled device C according to some embodiments of the present disclosure.

As shown in the figure, the control device 1 performs visual content recognition IR on the visual content VC obtained by the controlled device C and generates a visual recognition result RR.

In some embodiments, the control device 1 uses a visual recognition model (e.g., an image recognition model) to recognize object and position block of the object in the visual content VC. In some examples, the position block may be understood as a region of interest (ROI) in image recognition technology.

Specifically, the operation of generating the visual recognition result of the processor 12 further includes: inputting the visual content into a visual recognition model to generate a visual block (e.g., the position block) of an object in the visual content; and utilizing the visual block as the visual recognition result.

Please refer back to FIG. 2, on the other hand, the control device 1 performs speech recognition VR on the input voice VI of the user and converts the input voice VI into the input signal IS. Furthermore, the control device 1 performs an instruction generation IG based on the input signal IS to generate the control instruction CI.

In some embodiments, the control device 1 uses a speech recognition model to convert the input voice VI into the input signal IS.

Specifically, the operation of converting the input voice into the input signal of the processor 12 further includes: inputting the input voice into a speech recognition model to generate the input signal.

In order to perform visual content recognition IR, the control device 1 further stores an object data set, which is used to record visual content features (such as image features) of different objects.

Specifically, the control device 1 further includes a storage that is configured to store an object data set, wherein the object data set includes a plurality of feature tensors corresponding to a plurality of objects. The operation of generating the visual recognition result further includes: based on the object data set, recognizing one of the objects from the visual content and generating the visual recognition result.

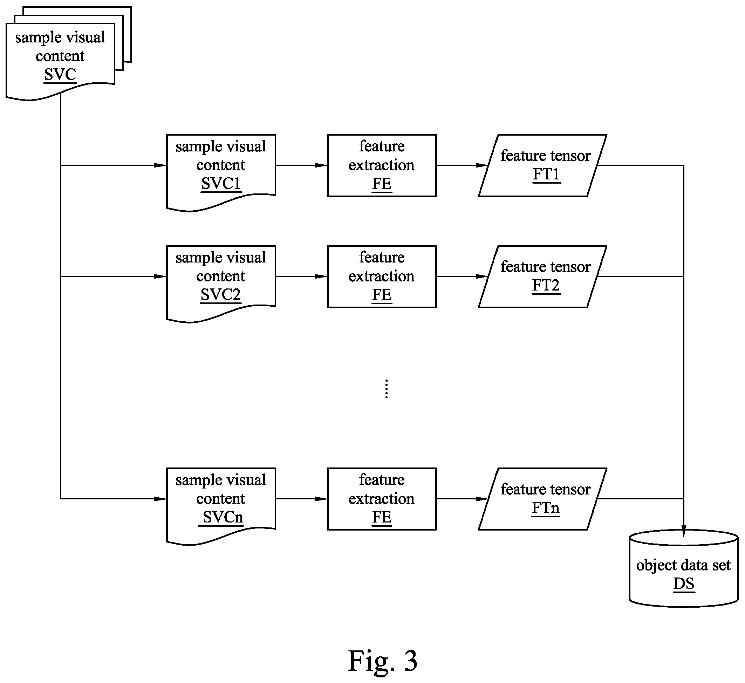

For a specific implementation of the object data set DS, please refer to FIG. 3. The sample visual contents SVC are visual contents including objects, such as person images and/or object images. Furthermore, after performing feature extraction FE on each of the sample visual contents SVC1-SVCn, feature tensors FT1-FTn may be obtained, and the feature tensors FT1-FTn are stored in the object data set DS. In some embodiments, the feature extraction FE may be implemented by a feature extraction layer in the image recognition model.

Specifically, the object data set DS is generated by operations of: obtaining a plurality of sample visual contents of the plurality of objects; for a first object of the plurality of objects, performing a feature extraction on a first sample visual content of the plurality of sample visual contents to generate a first feature tensor that corresponds to the first object, wherein the first sample visual content includes the first object; and utilizing the first feature tensor as one of the plurality of feature tensors.

It should be noted that in the object data set DS, the feature tensors FT1~FTn are labeled with the corresponding objects. For example, if the first sample visual content SVC1 is an image of Mary, then the first feature tensor FT1 will be labeled as a feature of Mary. Furthermore, multiple feature tensors may correspond to same object. For example, if the second sample visual content SVC2 is a left side view image of John, the third sample visual content SVC3 is a right view image of John, and the fourth sample visual content SVC4 is a front view image of John, then the second feature tensor FT2 corresponding to the second sample visual content SVC2, the third feature tensor FT3 corresponding to the third sample visual content SVC3, and the fourth feature tensor FT4 corresponding to the fourth sample visual content SVC4 will be labeled as features of John.

Accordingly, the control device 1 is able to recognize a specific object (e.g., the objects in the sample visual contents SVC) from the visual content VC based on the feature tensors FT1-FTn of the objects stored in the object data set DS. For example, Mary may be recognized from the visual content VC by the first feature tensor FT1, or John may be recognized by the feature tensors FT2~FT4.

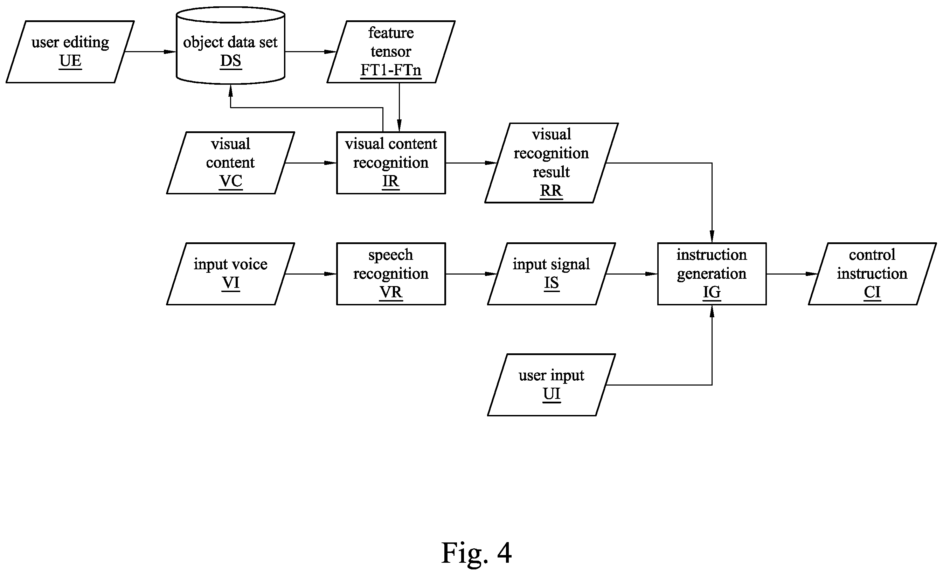

Furthermore, regarding the operation of performing visual content recognition IR using the object data set DS and generating the control instruction CI, please refer to FIG. 4.

As in the operation of FIG. 3, the object data set DS may be established based on user editing UE (for example, the user uploads the plurality of sample visual contents and labels the objects existing in each sample visual content). Furthermore, when performing visual content recognition IR, the control device 1 utilizes the feature tensors FT1-FTn in the object data set DS to recognize the object in the visual content VC and to generate the visual recognition result RR.

In some embodiments, when performing the instruction generation IG, the control device 1 further receives user input UI to adjust the control instruction CI.

Specifically, the control device 1 further includes a human machine interface (HMI) (e.g., receiving user input through an input interface). Accordingly, the control device 1 may generate the control instruction CI based on the user input.

For example, the user may select the object in the visual content through a touch screen to instruct the control device 1 to track the object; the user may also use a joystick to instruct the controlled device C to zoom; or the user may select one or more controlled devices C from a plurality of controlled devices C and send the control instruction CI to the selected controlled device(s) C.

In this way, in addition to input voice VI, the control device 1 may provide more ways for the user to generate the control instruction CI.

In some embodiments, the control device 1 controls the controlled device C based on different modes. For example, in a search mode, the control device 1 controls the controlled device C to search for a specific object. If the object is not in the field of view of the controlled device C, the control device 1 controls the controlled device C to rotate to adjust the field of view of the controlled device C and confirms whether the object is within the adjusted field of view of the controlled device C.

In other example, in a tracking mode, the control device 1 controls the controlled device C to track a specific object, and controls the controlled device C to move and/or rotate according to the position of the object to keep the object within the field of view of the controlled device C.

In order to select the correct mode, the control device 1 selects the corresponding mode based on the input signal IS. In addition, the control device 1 also sets the parameters of the mode based on the selected mode and the input signal IS.

Specifically, the operation of generating the control instruction that corresponds to the at least one of the controlled device of the processor 12 further includes: based on the input signal, selecting a designated mode from a plurality of modes; based on the input signal and the designated mode, setting a mode parameter that corresponds to the designated mode; and based on the designated mode and the mode parameter, generating the control instruction.

For example, if the user says to the control device 1 "The camera follows Mary", the control device 1 inputs the input signal IS into the language model and selects the tracking mode after understanding the semantics of the input signal IS. Furthermore, since the tracking mode requires a tracking target (i.e., mode parameter), the control device 1 further sets the tracking target to Mary based on the input signal IS. In this way, the control device 1 may control the controlled device C to track a specific person and/or object.

In addition, the control device 1 may also switch to other modes such as the search mode (i.e., moving and/or rotating the controlled device C to search for a specific object), a lock mode (i.e., maintaining a specific object in the center of the visual content), a patrol mode (i.e., moving and/or rotating the controlled device C to monitor the surrounding environment). The above modes can also be implemented based on the above operations by the control device 1 controlling the controlled device C. For the sake of brevity, details of the operations are not repeated.

In some embodiments, in the operation of the instruction generation IG, the control device 1 inputs the input signal IS into the language model. Correspondingly, the language model converts the input signal IS into a high-level control instruction, wherein the high-level control instruction is an instruction written in a natural language and used to represent an instruction for controlling the controlled device C. The high-level control instruction may include the instruction of controlled devices, the instruction of allocating resource, the instruction of event triggers, the instruction of timing, the instruction of actions, the instruction of acting direction, the instruction of execution order, etc.

In some embodiments, the high-level control instruction include at least one of parameters of a target device to be controlled, a resource allocation, an event trigger, a timing, and an execution order, or a combination thereof.

For example, the high-level control instruction may be "the camera rotates up 30 degrees", "the camera captures an image of a ball, then the robotic arm moves the ball to the right", or "the camera tracks Mary when Mary is in the field of view of the camera ", etc.

It should be noted that the language model may be trained by a training data set. Specifically, the training data set includes a plurality of sets of spoken text and corresponding control instruction (e.g., high-level control instruction). Accordingly, the trained language model may generate corresponding control instruction based on the input signal IS.

In some embodiments, the present disclosure may first collect a plurality of historical control data corresponding to the aforementioned high-level control instruction, and input the historical control data (e.g., historical data with marked control results) into a general-purpose language model (i.e., a language model with a certain degree of training) to perform fine-tuning operations. According to the aforementioned operations, the language model after fine-tuning operations may generate corresponding high-level control instruction based on the input data (e.g., human language).

However, since different controlled devices support different control protocols (e.g., ProAV NDI (Professional Audio-Visual Network Device Interface; ProAV HDI), VISCA-IP (Video System Control Architecture over Internet Protocol; VISCA-IP)), the control device 1 further needs to convert the high-level control instruction into an low-level control instruction based on the control protocol adopted by the controlled device C. In some examples, the control device 1 includes multiple adapters (e.g., VISCA (Video System Control Architecture; VISCA) adapter, ONVIF (Open Network Video Interface Forum; ONVIF) adapter) corresponding to different control protocols, the control device 1 selects a corresponding adapter based on the control protocol of the controlled device C to convert the high-level control instruction into the low-level control instruction. For example, when the control device 1 detects that the controlled device C is the PTZ camera or the user designates the PTZ camera as the controlled device C, the control device 1 selects the VISCA adapter based on the control protocol of the PTZ camera. In some examples, the adapter has a natural language parsing function. Accordingly, the control device 1 sends the low-level control instruction to the controlled device C to control the controlled device C. That is to say, the low-level control instruction is used as the aforementioned control instruction CI.

In some embodiments, each of the controlled devices includes an interface corresponding to the control protocol thereof. The control device 1 can actively detect the control protocol corresponding to the target controlled device and select an adapter corresponding to the control protocol to perform control instruction conversion operation.

Specifically, the operation of generating the control instruction corresponds to the at least one controlled device of the processor 12 further includes: inputting the input signal into a language model to generate a high-level control instruction; and based on the high-level control instruction and the visual recognition result, generating a low-level control instruction that corresponds to the at least one controlled device as the control instruction, wherein the low-level control instruction corresponds to a control protocol of the at least one controlled device.

In some embodiments, the control device 1 may further determine which of the controlled device C is to be controlled based on the input signal (e.g., user's indication).

Specifically, the operation of sending the control instruction to the at least one controlled device further includes: based on the input signal, selecting at least one designated controlled device from the at least one controlled device; and sending the control instruction to the at least one designated controlled device to control the at least one designated controlled device to execute the control instruction.

For example, if the user says to the control device 1 "Group A shoots a car", the control device 1 sends the control instruction CI to the controlled device C of Group A (i.e., the designated controlled device) after inputting the input signal IS into the language model and understanding the semantics of the input signal IS.

In some embodiments, the control device 1 may also determine which of the controlled device C is to be controlled based on the positions and/or the relative positions of the controlled devices C.

Specifically, the operation of sending the control instruction to the at least one controlled device of the processor 12 further includes: based on at least one position of the at least one controlled device, selecting at least one designated controlled device from the at least one controlled device; and sending the control instruction to the at least one designated controlled device to control the at least one designated controlled device to execute the control instruction.

For example, assume that the control device 1 controls a first controlled device (not shown) to track a specific object, and the object moves to the right within the visual content (e.g., image) of the first controlled device. The object then continues moving to the right and moves out of the range of the visual content obtainable by the first controlled device. At this time, the control device 1 switches to control a second controlled device (not shown) located to the right of the first controlled device to search and track the object.

In other example, the control device 1 may also determine which of the controlled device C is to be controlled based on the input signal (e.g., user input) in combination with the positions of the controlled devices. For example, when the user inputs "Please track Paul in the lobby", the control device 1 determines to control the controlled device in the lobby without controlling the controlled devices in other spaces.

In some embodiments, after generating the corresponding control instruction CI based on the input signal IS, the control device 1 still generates new control instructions CI at regular intervals to continuously control the controlled device C.

Specifically, the processor 12 is further configured to execute operations of: after generating the control instruction that corresponds to the input signal, based on a current visual content that is obtained by the at least one controlled device, generating a current visual recognition result; based on the input signal and the current visual recognition result, generating a current control instruction that corresponds to the at least one controlled device; and sending the current control instruction to the at least one controlled device to control the at least one controlled device to execute the current control instruction. In some embodiments, the current visual content is obtained later than the visual content that is used to generate the control instruction.

For example, when the control device 1 selects the patrol mode, the control device 1 sends the control instruction CI to the controlled device C to rotate the controlled device. However, if the control device 1 does not send a new control instruction, the controlled device C will stop rotating after executing the control instruction CI (for example, after rotating a predetermined angle). Therefore, the control device 1 may determine whether to remain in the patrol mode based on the current visual content obtained by the controlled device C. When the control device 1 determines to remain in the patrol mode, the control device 1 generates and sends a new control instruction CI (that is, an instruction to rotate the controlled device C). Otherwise, when the control device 1 determines not to remain in the patrol mode, for example, a suspicious object is recognized from the current visual content, the control device 1 determines to switch to the tracking mode and correspondingly generates a new control instruction CI (that is, an instruction to track the suspicious object).

The relative positions of the controlled devices C may be inputted in advance and stored in the control device 1. In this way, the control device 1 may be applied in environments such as those involving surveillance monitors, thereby improving control efficiency.

In some embodiments, the environment may include a plurality of controlled devices (e.g., camera and robotic arm). In this example, in addition to generating a control instruction for controlling the camera, the control device 1 may also generate a control instruction for controlling other controlled device (e.g., robotic arm) in the environment.

For example, the controlled device C (e.g., camera) obtains the visual content of the environment, and then the control device 1 recognizes an object in the environment (i.e., the visual recognition result), generates the control instruction based on the input signal (e.g., the action indicated by the user), and sends the control instruction to other controlled device (e.g., robotic arm) to perform the task assigned by the user (e.g., gripping the object).

Specifically, the processor 12 is further configured to execute operations of: based on the input signal and the visual recognition result, generating a second control instruction corresponding to a device (e.g., robotic arm); and sending the second control instruction to the device to control the device to execute the second control instruction corresponding to the input signal.

In some embodiments, the processor 12 includes a neural network processor (e.g., neural-network processing unit (NPU)) that is configured to execute the visual recognition model to generate the visual recognition result RR.

In some embodiments, the processor 12 includes a graphics processor (e.g., graphics processing unit (GPU)) that is configured to execute the language model to generate the control instruction CI.

In some embodiments, the processor 12 of the control device 1 includes a central processing unit, a graphics processor, and a neural network processor, wherein the central processing unit and the graphics processor are used to perform the speech recognition VR and the instruction generation IG, and the neural network processor is used to perform the visual content recognition IR.

In summary, the control device 1 of the present disclosure may convert the input signal (e.g., voice input by the user) into the instruction to control the controlled device C, thereby providing a convenient device control technology. The control device 1 may control multiple controlled devices C to perform different tasks at the same time as required, which may save labor costs. In addition, the control device 1 may continuously generate control instructions CI to perform tasks according to the input signal.

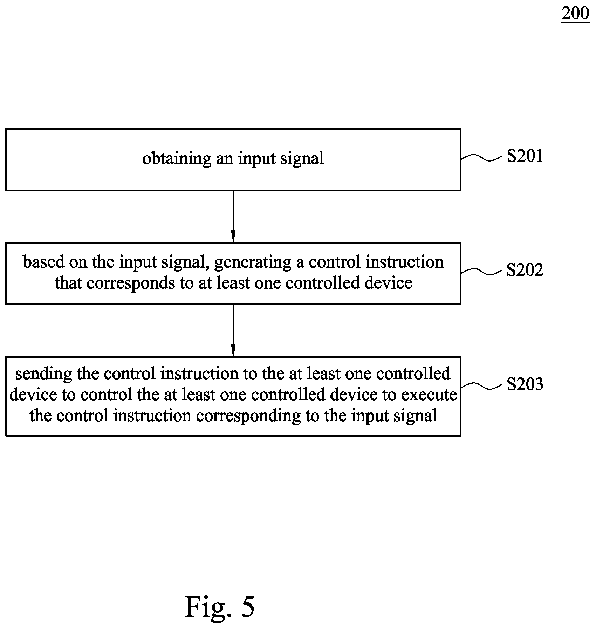

Please refer to FIG. 5, which is a flow chart of a control method 200 according to the second embodiment of the present disclosure. The control method 200 includes steps S201 to S203. The control method 200 is configured to control a controlled device based on an input signal (e.g., voice input by the user). The control method 200 can be executed by an electronic device (e.g., the control device 1 of the first embodiment).

First, in step S201, the electronic device obtains an input signal.

Next, in step S202, the electronic device generates a control instruction corresponding to at least one controlled device based on the input signal.

Finally, in step S203, the electronic device sends the control instruction to the at least one controlled device to control the at least one controlled device to execute the control instruction corresponding to the input signal.

In some embodiments, step S201 further includes the electronic device obtaining an input voice of a user; and the electronic device converting the input voice into the input signal.

In some embodiments, the control method 200 further includes the electronic device performing a visual content recognition on a visual content to generate a visual recognition result. Step S202 further includes based on the input signal and the visual recognition result, the electronic device generating the control instruction that corresponds to the at least one controlled device.

In some embodiments, the visual content is obtained by the at least one controlled device.

In some embodiments, the step of generating the visual recognition result further includes the electronic device inputting the visual content into a visual recognition model (e.g., image recognition model) to generate a visual block (e.g., region of interest) of an object in the visual content; and the electronic device utilizing the visual block as the visual recognition result.

In some embodiments, the control method 200 further includes the electronic device storing an object data set, wherein the object data set includes a plurality of feature tensors corresponding to a plurality of objects. The step of generating the visual recognition result further includes: based on the object data set, the electronic device recognizing one of the plurality of objects from the visual content and generating the visual recognition result.

In some embodiments, the object data set is generated by steps of: obtaining a plurality of sample visual contents of the plurality of objects; for a first object of the plurality of objects, performing a feature extraction on a first sample visual content of the plurality of sample visual contents to generate a first feature tensor that corresponds to the first object, wherein the first sample visual content includes the first object; and utilizing the first feature tensor as one of the plurality of feature tensors.

In some embodiments, step S201 further includes the electronic device inputting an input voice into a speech recognition model to generate the input signal.

In some embodiments, step S202 further includes based on the input signal, the electronic device selecting a designated mode from a plurality of modes; based on the input signal and the designated mode, the electronic device setting a mode parameter that corresponds to the designated mode; and based on the designated mode and the mode parameter, the electronic device generating the control instruction.

In some embodiments, step S202 further includes the electronic device inputting the input signal into a language model to generate a high-level control instruction; and based on the high-level control instruction, the electronic device generating a low-level control instruction that corresponds to the at least one controlled device as the control instruction, wherein the low-level control instruction corresponds to a control protocol of the at least one controlled device.

In some embodiments, step S203 further includes based on the input signal, the electronic device selecting at least one designated controlled device from the at least one controlled device; and the electronic device sending the control instruction to the at least one designated controlled device to control the at least one designated controlled device to execute the control instruction.

In some embodiments, step S203 further includes based on at least one position of the at least one controlled device, the electronic device selecting at least one designated controlled device from the at least one controlled device; and the electronic device sending the control instruction to the at least one designated controlled device to control the at least one designated controlled device to execute the control instruction.

In some embodiments, the control method 200 further includes after generating the control instruction that corresponds to the input signal, based on a current visual content that is obtained by the at least one controlled device, the electronic device generating a current visual recognition result; based on the input signal and the current visual recognition result, the electronic device generating a current control instruction that corresponds to the at least one controlled device; and the electronic device sending the current control instruction to the at least one controlled device to control the at least one controlled device to execute the current control instruction.

In some embodiments, the electronic device further includes a neural network processor that is configured to execute a visual recognition model to generate the visual recognition result, and a graphics processor that is configured to execute a language model to generate the control instruction.

In some embodiments, the control method 200 further includes steps of: the electronic device obtaining an input signal; based on the input signal, the electronic device generating a high-level control instruction; the electronic device converting the high-level control instruction into a low-level control instruction that corresponds to the at least one controlled device; and the electronic device sending the low-level control instruction to the at least one controlled device to control the at least one controlled device to execute the low-level control instruction that corresponds to the input signal.

It shall be appreciated that in the specification and the claims of the present disclosure, some words (e.g., the object, the sample visual content, the feature tensor, the controlled device, and the control instruction, etc.) are preceded by terms such as "first", "second", "third", or "fourth", and these terms of "first", "second", "third", or "fourth" are only used to distinguish these different words. For example, the "first" sample visual content and the "second" sample visual content are only used to indicate different sample visual contents.

In summary, the control method 200 of the present disclosure may convert the input signal (e.g., voice input by the user) into the instruction to control the controlled device, thereby providing a convenient device control technology. The control method 200 may control multiple controlled devices C to perform different tasks at the same time as required, which may save labor costs. In addition, the control method 200 may continuously generate control instructions to perform tasks according to the input signal.

Although the present disclosure has been described in considerable detail with reference to certain embodiments thereof, other embodiments are possible. Therefore, the spirit and scope of the appended claims should not be limited to the description of the embodiments contained herein.

## Claims

1. A control device (1), **characterized in that**, the control device is configured to control at least one controlled device (C) and comprises:
a communication interface (14), being configured to communicate with the at least one controlled device; and
a processor (12), being electrically coupled to the communication interface and being configured to execute operations of:
obtaining an input signal (IS);
based on the input signal, generating a control instruction (CI) corresponding to the at least one controlled device; and
sending the control instruction to the at least one controlled device to control the at least one controlled device to execute the control instruction corresponding to the input signal.

2. The control device of claim 1, wherein the operation of obtaining the input signal further comprises:
obtaining an input voice (VI) of a user; and
converting the input voice into the input signal.

3. The control device of any one of claims 1 to 2, wherein the processor is further configured to execute operations of:
performing a visual content recognition (IR) on a visual content (VC) to generate a visual recognition result (RR),
wherein the operation of generating the control instruction further comprises:
based on the input signal and the visual recognition result, generating the control instruction corresponding to the at least one controlled device.

4. The control device of claim 3, wherein the visual content is obtained by the at least one controlled device.

5. The control device of any one of claims 3 to 4, wherein the operation of generating the visual recognition result further comprises:
inputting the visual content into a visual recognition model to generate a visual block of an object in the visual content; and
utilizing the visual block as the visual recognition result.

6. The control device of any one of claims 3 to 4, further comprising:
a storage, being configured to store an object data set (DS), wherein the object data set comprises a plurality of feature tensors (FT) corresponding to a plurality of objects,
wherein the operation of generating the visual recognition result further comprises:
based on the object data set, recognizing one of the plurality of objects from the visual content and generating the visual recognition result.

7. The control device of claim 6, wherein the object data set is generated by operations of:
obtaining a plurality of sample visual contents of the plurality of objects;
for a first object of the plurality of objects, performing a feature extraction (FE) on a first sample visual content (SVC1) of the plurality of sample visual contents (SVC) to generate a first feature tensor (FT1) corresponding to the first object, wherein the first sample visual content comprises the first object; and
utilizing the first feature tensor as one of the plurality of feature tensors.

8. The control device of any one of claims 1 to 7, wherein the operation of generating the control instruction corresponding to the at least one controlled device further comprises:
based on the input signal, selecting a designated mode from a plurality of modes;
based on the input signal and the designated mode, setting a mode parameter corresponding to the designated mode; and
based on the designated mode and the mode parameter, generating the control instruction.

9. The control device of any one of claims 1 to 7, wherein the operation of generating the control instruction corresponding to the at least one of the controlled device further comprises:
inputting the input signal into a language model to generate a high-level control instruction; and
based on the high-level control instruction, generating a low-level control instruction corresponding to the at least one controlled device as the control instruction, wherein the low-level control instruction corresponds to a control protocol of the at least one controlled device.

10. The control device of any one of claims 1 to 9, wherein the operation of sending the control instruction to the at least one controlled device further comprises:
based on the input signal, selecting at least one designated controlled device from the at least one controlled device; and
sending the control instruction to the at least one designated controlled device to control the at least one designated controlled device to execute the control instruction.

11. The control device of any one of claims 1 to 9, wherein the operation of sending the control instruction to the at least one controlled device further comprises:
based on at least one position of the at least one controlled device, selecting at least one designated controlled device from the at least one controlled device; and
sending the control instruction to the at least one designated controlled device to control the at least one designated controlled device to execute the control instruction.

12. The control device of any one of claims 1 to 11, wherein the processor is further configured to execute operations of:
after generating the control instruction corresponding to the input signal, based on a current visual content that is obtained by the at least one controlled device, generating a current visual recognition result;
based on the input signal and the current visual recognition result, generating a current control instruction corresponding to the at least one controlled device; and
sending the current control instruction to the at least one controlled device to control the at least one controlled device to execute the current control instruction.

13. A control method (200), **characterized in that**, the control method is applied to an electronic device and comprises steps of:
obtaining an input signal (IS) (S201);
based on the input signal, generating a control instruction (CI) corresponding to at least one controlled device (S202); and
sending the control instruction to the at least one controlled device to control the at least one controlled device to execute the control instruction corresponding to the input signal (S203).

14. The control method of claim 13, wherein the step of obtaining the input signal further comprises:
obtaining an input voice (VI) of a user; and
converting the input voice into the input signal.

15. The control method of any one of claims 13 to 14, further comprising steps of:
performing a visual content recognition (IR) on a visual content (VC) to generate a visual recognition result (RR),
wherein the step of generating control instruction further comprises:
based on the input signal and the visual recognition result, generating the control instruction corresponding to the at least one controlled device.
